# EUROPEAN PATENT SPECIFICATION

(11) **EP 2 377 957 B1**
(45) Date of publication and mention of the grant of the patent: **23.04.2014**
(21) Application number: 11005810.4
(22) Date of filing: 06.03.2008
(51) Int. Cl.: C22C 1/05, C22C 29/00, C22C 29/02

(54) **Composite articles**
Werkstoffverbindartikel
Article composite

(30) Priority: 16.03.2007 US 687343
(43) Date of publication of application: 19.10.2011
(62) Divisional of application: 08743705.9
(73) Proprietor: TDY Industries, LLC, Pittsburgh, Pennsylvania 15222-5479 (US)
(72) Inventor: Fang, Daniel X, Brentwood, Tennessee 37027 (US); Morton, Craig, Nolensville, Tennessee 37135 (US); Wills, David J., Franklin, TN 37068 (US)
(74) Representative: Potter Clarkson LLP

(56) References cited:
- WO-A-2007/022336
- US-A1- 2006 051 618
- US-B1- 6 511 265

## Description

This patent application is a divisional application of European Patent Application number 08743705.9, which claims a composite article as described herein.
The present invention is generally directed to composite articles selected from cutting tools and cutting tool inserts having a composite construction including regions of differing composite materials.

Certain non-limiting embodiments of a composite article according to the present disclosure comprise at least a first composite material and a second composite material, wherein each of the first and second composite materials individually comprises hard particles in a binder, and wherein the concentration of ruthenium in the binder of the first composite material is different from the concentration of ruthenium in the binder of the second composite material. Also, in certain non-limiting embodiments of a composite article according to the present disclosure, one of the first and second composite materials comprises ruthenium in the binder and the other of the first and second composite materials lacks ruthenium or comprises no more than an incidental concentration of ruthenium in the binder. Examples of composite articles according to the present disclosure include, but are not limited to, cemented carbide tools used in material removal operations such as, for example, turning, milling, threading, grooving, drilling, reaming, countersinking, counterboring, and end milling.

### BACKGROUND OF THE INVENTION

Cutting tool inserts employed for machining of metals and metallic (i.e., metal-containing) alloys are commonly fabricated from composite materials. Composite materials provide an attractive combination of mechanical properties, such as strength, toughness, and wear resistance, compared to certain other tool materials, such as tool steels and ceramics. Conventional cutting tool inserts made from a composite material, such as cemented carbide, are based on a "monolithic" construction, which means that they are fabricated from a single grade of cemented carbide. As such, conventional monolithic cutting tools have substantially the same mechanical and chemical properties at all locations throughout the tool.

Cemented carbide materials or, more simply, "carbide materials" or "carbides", comprise at least two phases: at least one hard particulate ceramic component; and a softer matrix of metallic binder. The hard ceramic component may be, for example, carbides of any carbide-forming element, such as, for example, titanium, chromium, vanadium, zirconium, hafnium, molybdenum, tantalum, tungsten, and niobium. A common, non-limiting example is tungsten carbide. The binder may be a metal or metallic alloy, typically cobalt, nickel, iron, or alloys of any of these metals. The binder "cements" the ceramic component within a continuous matrix interconnected in three dimensions. As is known in the art, cemented carbides may be fabricated by consolidating a powder including at least one powdered ceramic component and at least one powdered metallic binder material.

The physical and chemical properties of cemented carbides depend in part on the individual components of the metallurgical powders used to produce the materials. The properties of a particular cemented carbide are determined by, for example, the chemical composition of the ceramic component, the particle size of the ceramic component, the chemical composition of the binder, and the weight or volume ratio of binder to ceramic component. By varying the ingredients of the metallurgical powder, cutting tools, such as cutting tool inserts, including indexable inserts, drills and end mills can be produced with unique properties matched to specific cutting applications.

In applications involving the machining of modern metallic materials, enriched grades of carbide are often utilized to achieve the desired quality and productivity requirements. However, cutting tool inserts having a monolithic carbide construction composed of higher grades of cemented carbides are expensive to fabricate, primarily due to high material costs. In addition, it is difficult to optimize the composition of conventional monolithic indexable cutting inserts composed of single grades of carbide material to meet the differing demands placed on the various regions of the inserts.

Composite rotary tools made of two or more different carbide materials or grades are described in United States Patent No. 6,511,265. At this time, composite carbide cutting tool inserts are more difficult to manufacture than rotary cutting tools. For example, cutting inserts are, typically, much smaller than rotary cutting tools. Also, the geometries, in particular, cutting edges and chip breaker configurations, of current cutting tool inserts are complex in nature. With cutting tool inserts, the final product is produced by a pressing and sintering process, and the process also may include subsequent grinding operations.

United States Patent No. 4,389,952, which issued in 1983, describes an innovative method of making composite cemented carbide tools by first manufacturing a slurry containing a mixture of carbide powder and a liquid vehicle, and then painting or spraying a surface layer of the mixture onto a green compact of a different carbide. A composite carbide tool made in this way has distinct mechanical properties differing between the core region and the surface layer. The described applications of this method include fabricating rock drilling tools, mining tools and indexable cutting tool inserts for metal machining. However, the slurry-based method described in the '952 patent can only be applied to making indexable cutting inserts without chip breaker geometries or, at best, with very simple chip breaker geometries. This is because a thick layer of slurry will alter the insert's chip breaker geometry. Widely used indexable cutting inserts, in particular, must have intricate chip breaker geometries in order to meet the ever-increasing demands for machining a variety of work materials. In addition, performing the slurry-based method of producing composite tools and inserts requires a substantially greater investment in specialized manufacturing operations and production equipment.

Ruthenium (Ru) is a member of the platinum group and is a hard, lustrous, white metal that has a melting point of approximately 2,500 °C. Ruthenium does not tarnish at room temperatures, and may be used as an effective hardener, creating alloys that are extremely wear resistant. It has been found that including ruthenium in a cobalt binder in cemented carbide used in cutting tools or cutting tool inserts improves resistance to thermal cracking and significantly reduces crack propagation along the edges and into the body of the cutting tool or cutting tool insert. Typical commercially available cutting tools and cutting tool inserts may include a cemented carbide substrate having a binder phase including approximately 3% to 30% ruthenium. A significant disadvantage of adding ruthenium, however, is that it is a relatively expensive alloying ingredient.

A cutting tool insert including a cemented carbide substrate may comprise one or more coating layers on the substrate surface to enhance cutting performance. Methods for coating cemented carbide cutting tools include chemical vapor deposition (CVD), physical vapor deposition (PVD) and diamond coating.

There is a need to develop improved efficient, low cost cutting tool inserts for metal and metallic alloy machining applications.

The invention provides a composite article in accordance with claim 1 of the appended claims.

The invention relates to a composite article including a first composite material and a second composite material. The first composite material and the second composite material individually comprise hard particles in a binder, and a concentration of ruthenium in the binder of the first composite material comprises from 8 to 20 weight percent and is different from a concentration of ruthenium in the binder of the second composite material by at least 1 weight percent.

In a composite article according to the present disclosure, the binder of the first composite material includes 8 to 20 weight percent ruthenium. Also, in certain non-limiting embodiments of a composite article according to the present disclosure, the binder of the second composite material lacks ruthenium or includes only an incidental concentration of ruthenium. In addition, the concentration of ruthenium in the binder of the first composite material and the concentration of ruthenium in the binder of the second composite material differ by at least.1 weight percent, at least 5 weight percent, or at least 10 weight percent.

The composite article according to the present disclosure is one of a cutting tool and a cutting tool insert. For example, embodiments of the composite article according to the present disclosure may be selected from a ballnose end mill, a ballnose cutting insert, a milling cutting insert, a spade drill insert, a drilling insert, a turning cutting insert, a grooving insert, a threading insert, a cut-off insert, and a boring insert.

Unless otherwise indicated, all numbers expressing quantities of ingredients, time, temperatures, and so forth used in the present specification and claims are to be understood as being modified in all instances by the term "about." At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, may inherently contain certain errors necessarily resulting from the standard deviation found in their respective testing measurements.

The reader will appreciate the foregoing details and advantages of the present invention, as well as others, upon consideration of the following detailed description of certain non-limiting embodiments of the invention. The reader also may comprehend such additional details and advantages of the present invention upon making and/or using embodiments within the present invention.

### BRIEF DESCRIPTION OF THE FIGURES

Figures 1a through 1d depict an embodiment of a square indexable cutting tool insert according to the present disclosure, comprising three regions of composite materials.

Figures 2a through 2c depict an embodiment of a square indexable cutting tool insert according to the present disclosure, comprising two regions of composite materials.

Figures 3a through 3c depict an embodiment of a diamond-shaped indexable cutting tool insert according to the present disclosure, comprising three regions of composite materials.

Figures 4a through 4c depict an embodiment of a square indexable cutting tool insert according to the present disclosure, comprising two regions of composite materials.

Figures 5a through 5d depict an embodiment of a diamond-shaped indexable cutting tool insert according to the present disclosure, comprising five regions of composite materials.

Figures 6a through 6c depict an embodiment of an indexable cutting tool insert according to the present disclosure, comprising two regions of composite materials.

Figures 7a through 7c depict an embodiment of a round-shaped indexable cutting insert according to the present disclosure, comprising two regions of composite materials.

Figures 8a through 8c depict an embodiment of a round-shaped indexable cutting tool insert according to the present disclosure, comprising two regions of composite materials.

Figures 9a through 9c depict an embodiment of a groove or cut-off cutting insert according to the present disclosure, comprising three regions of composite materials.

Figures 10a through 10c depict an embodiment of a spade drill insert according to the present disclosure, comprising two regions of composite materials.

Figures 11 a through 11 c depict an embodiment of a spade drill insert having the design depicted in Figure 10a, but having a different composite construction comprising two regions of composite materials.

Figure 12 is a picture of a manufactured sample spade drill insert having the composite construction of Figures 11 a through 11 c.

Figures 13a through 13c depict an embodiment of a ballnose cutting tool insert according to the present disclosure, comprising two regions of composite materials.

Figure 14 is a picture of a manufactured sample ball nose cutting insert having the composite construction of Figures 13a through 13c.

Figures 15a and 15b depict an embodiment of a milling cutting insert according to the present disclosure, having a square shape and four rounded corners, and comprising two regions of composite materials.

Figures 16a and 16b, respectively, are a picture and a sectioned view of a sample composite cutting tool insert having the composite structure in Figure 15, and including a ruthenium featured carbide with X44 substrate in a top region and a non-ruthenium featured carbide with H91 substrate in a bottom region.

### DESCRIPTION OF CERTAIN NON-LIMITING EMBODIMENTS

The present disclosure describes unique composite articles such as, for example, composite cutting tool inserts, rotary cutting tool inserts, drilling inserts, milling inserts, spade drills, spade drill inserts, and ballnose inserts. Composite articles according to the present disclosure include a first composite material and a second composite material. According to the present disclosure, each composite material individually comprises hard particles in a binder, and the concentration of ruthenium in the binder of the first composite material comprises from 8 to 20 weight percent and is different from the concentration of ruthenium in the binder of the second composite material by at least 1 weight percent. In certain non-limiting embodiments, composite articles according to the present disclosure comprise a first composite material including ruthenium in the binder, and a second composite material including a binder that either does not comprise ruthenium or comprises no more than an incidental concentration of ruthenium in the binder.

The composite articles according to the present disclosure present may be contrasted with the subject matter of US patent application US 2006/051618 which relates to PVD coated tungsten carbide cutting inserts with Ruthenium as a key element, U.S. Patent No. 6,511,265, which issued in January 2003 and relates to composite carbide rotary tools, and pending U.S. patent application Serial No. 11/206,368, which relates to methods for manufacturing composite carbide cutting inserts. Certain composite articles according to the present disclosure differ from the subject matter of the '265 patent and '368 application for at least the reason that the present disclosure describes unique composite structures including at least a first and second composite materials, wherein each composite material individually comprises hard particles in a binder and the concentration of ruthenium in the binder of the first composite material is different from the concentration of ruthenium in the binder of the second composite material.

Including ruthenium in the binder phase of cemented carbides has been found to provide improved resistance to thermal cracking in cutting tools and cutting tool inserts during machining operations, reduced propagation of cracks along and beyond the cutting edges, reduced propagation of cracks into the substrate, as well as other benefits. Cemented hard particles in a binder wherein the binder comprises ruthenium are referred to herein as "ruthenium featured carbides". Ruthenium may be present in any quantity effective to have a beneficial effect on the properties of the cutting tool, cutting tool insert, or other article. The concentration of ruthenium in the binder is from 8% to 20% by weight, based on the total weight of the binder.

Although adding ruthenium can provide significant benefits, as noted above, it is an expensive alloying constituent. In that regard, certain non-limiting embodiments of composite articles, such as, for example, cutting tools and cutting tool inserts, according to the present disclosure may include ruthenium in the binder of only those regions of the article that can benefit from the advantages that the presence of ruthenium provides in cutting operations. The concentration of ruthenium in other regions of the article, regions that would not significantly benefit from the presence of ruthenium in the binder of those regions, may be zero, or may be reduced relative to other regions. Accordingly, for example, the present disclosure comprehends a composite article including different regions of cemented carbides having varying levels of ruthenium in the regions' binders. Ruthenium preferably is included in relatively high concentrations in the binder of regions of the article that will benefit from the improved properties afforded by the presence of ruthenium in such regions. Ruthenium preferably is absent, is present only in incidental amounts, or is present in relatively low concentrations in the binder of regions of the article that will not significantly benefit from the improved properties afforded by the presence of ruthenium in such regions.

In the composite articles according to the present disclosure, the ruthenium concentration of the binder of the first composite material and the ruthenium concentration of the binder of the second composite material differ by at least 1 weight percent, at least 5 weight percent, or at least 10 weight percent, wherein such differences are determined by subtracting the lower ruthenium concentration from the higher ruthenium concentration. Certain embodiments of composite cutting tools and cutting tool inserts fabricated with regions having varying binder concentrations of ruthenium, for example, can reduce the usage of ruthenium by 40% to 90% (by weight) relative to monolithic articles, wherein the concentration of ruthenium is uniform throughout the article. Thus, constructing composite articles, such as cutting tools and cutting tool inserts, according to the present disclosure can significantly reduce the cost to produce such articles, and without sacrificing desired cutting properties.

Embodiments of composite articles according to the present disclosure, for example, composite inserts, may include chip forming geometries on one or both of the articles' top and bottom surfaces. The chip forming geometry of the composite article may be, for example, a complex chip forming geometry. A complex chip forming geometry may be any geometry that has various configurations on the tool rake face, such as lumps, bumps, ridges, grooves, lands, backwalls, or combinations of two or more such features.

As used herein, "composite article" or "composite cutting tool" refers to an article or cutting tool having discrete regions of composite materials differing in one or more characteristics selected from physical properties, chemical properties, chemical composition, and microstructure. For purposes of this definition, a coating applied to an article, cutting tool, or cutting tool insert is not considered to alone constitute a "region". Also, as used herein, a "composite material" is a material that includes two or more substantially homogenously distributed phases. An example of a composite material is a cemented carbide, which includes a particulate ceramic material in a binder. In certain embodiments according to the present disclosure, a first region of composite material includes ruthenium in the binder (a "ruthenium featured composite material"); and a second region of composite material does not comprise ruthenium (a "non-ruthenium featured composite material"). In certain embodiments of composite articles according to the present disclosure, the characteristic that differs between the discrete regions is at least one of hardness, tensile strength, wear resistance, fracture toughness, modulus of elasticity, corrosion resistance, coefficient of thermal expansion, and coefficient of thermal conductivity.

Composite inserts that may be constructed as provided in the present disclosure include, for example, inserts for turning, threading, grooving, milling, slot milling, end milling, face milling, drilling, reaming, countersinking, counterboring, and tapping of materials. There may be boundaries between the regions of such articles that differ in one or more characteristics. The boundaries between the regions, however, typically are not dear, discrete, planar boundaries due to the nature of the manufacturing process and the powdered metals. During powder addition into a die or mold in certain methods that may be used to form composite articles according to the present disclosure, for example, there may be some mixing of the powdered metal grades near the regions of interface between the grades. Therefore, as used herein, reference to "boundaries" or a "boundary" between two regions of composite materials refers to a general boundary region between the two regions, wherein the two regions constitute predominantly one or the other composite material. Further, during sintering of pre-sintered compacts comprising two or more regions, there may be some diffusion of materials between the regions.

Certain non-limiting embodiments according to the present disclosure are directed to composite articles, such as, for example, composite cutting tool inserts, including at least one cutting edge and at least two regions of composite materials that differ with respect to at least one characteristic. Certain embodiments of composite inserts according to the present disclosure may be indexable and/or comprise chip forming geometries. The differing characteristics of the two or more regions of composite material result from at least a difference in ruthenium concentration in binder phases included in the two regions, but also may be a result of variation in other characteristics of the regions such as variations in chemical composition (in addition to ruthenium concentration) and microstructure. The chemical composition of a particular region is a function of, for example, the chemical composition of the ceramic component and/or binder of the region, and the carbide-to-binder ratio of the region.

Composite articles according to the present disclosure may be produced by any known method of producing composite materials. Examples of such methods include the method of producing a composite article described in U.S. Patent Application No. 11/206,368.

Examples of the first and second composite materials included in articles according to the present disclosure may individually comprise hard particles in a binder. The hard particles in each of the composite materials may independently comprise, for example, at least one of a carbide, a nitride, a boride, a silicide, an oxide, and a solid solution of two more of these, and the binder material may comprise, for example, at least one of cobalt, nickel, iron, and alloys of these metals. In certain non-limiting embodiments, the hard particles may comprise a metal carbide, wherein the metal of the metal carbide is selected from any carbide forming element, such as, for example, titanium, chromium, vanadium, zirconium, hafnium, molybdenum, tantalum, tungsten, and niobium. Also, in certain non-limiting embodiments, the metal carbide of the first composite material differs from the metal carbide of the second composite material in at least one of chemical composition and average grain size. The binder material of the first composite material and the binder of the second composite material may each individually comprise, for example, one or more of cobalt, cobalt alloy, nickel, nickel alloy, iron, and iron alloy. In certain embodiments, the first composite material and the second composite material may individually comprise from 2 to 40 weight percent of the binder and from 60 to 98 weight percent of a metal carbide, based on the total weight of the material. The binder of the first carbide grade and the binder of the second carbide grade may differ in the concentration of ruthenium in the binder and may also differ in other aspects, such as chemical composition, weight percentage of binder in the carbide material, metal grade, or both. The first material includes ruthenium in a concentration that is at least 1 weight percent and may be from 1 to 10, or from 5 to 20, weight percent more than the concentration of ruthenium in the second material. The two of more powdered cemented carbide grades in a particular article according to the present disclosure may comprise ruthenium in the binder, but in embodiments comprising multiple regions of ruthenium featured composite materials, the concentration of ruthenium in the binder of one region may be different from the ruthenium concentration in a different region, but may be substantially similar to the concentration of ruthenium in any other region.

A necessarily limited number of examples of composite articles according to the present disclosure are provided below. It will be apparent to one skilled in the art that the following discussion of embodiments according to the present disclosure may be adapted to the fabrication of composite inserts having complex geometries and/or more than two regions of composite materials. For example, certain embodiments of the composite articles according to the present disclosure may have 3, 4, 5, 6, or more regions of composite material, wherein each region differs from at least one other region in the article in at least one characteristic. The following discussion of certain embodiments is not intended to restrict the invention, but merely to illustrate certain possible embodiments.

Embodiments of composite articles according to the present disclosure, such as embodiments of cutting tool inserts, may be produced at lower cost than conventional articles. Cost savings may be obtained by providing ruthenium in regions of the article that will benefit from the presence of ruthenium when the article is in use, while eliminating or limiting the concentration of ruthenium in other regions wherein the benefits of ruthenium may not be exploited to significant advantage when the article is in use. Another advantage of certain embodiments of composite articles, such as certain composite cutting tool inserts, according to the present disclosure is the flexibility available to the tool designer to tailor characteristics of different regions of the composite articles to adapt the articles to specific cutting applications. For example, the size, location, thickness, geometry, and/or physical properties of an individual cemented carbide material in one region of a cutting insert according to the present disclosure may be selected to suit a specific machining application.

As used herein, a "core region" of a composite article in the form of a cutting tool insert refers to a portion of the insert generally including the center of the insert. As used herein, a "core region" of a composite article in the form of a drill insert refers to a core portion including the cutting edge subjected to the lowest cutting speeds, which typically is the cutting edge that is closest to the axis of rotation. As used herein, a "surface region" of a cutting tool insert includes all or a portion of the surface of the insert. As used herein, a "surface region" of a drill insert includes the surface of the cutting edge subjected to the higher cutting speeds, which typically is a cutting edge that is relatively far from the axis of rotation. In certain insert embodiments, the core region includes a portion of the surface of the insert.

Certain non-limiting embodiments of composite inserts according to the present disclosure may have a surface region of a carbide material comprising ruthenium in the binder to provide the surface region with improved wear resistance, and a core region of a relatively tougher carbide material to increase shock or impact resistance of the core region. In such embodiments, the core regions may or may not include a binder comprising ruthenium, and if ruthenium is present in the core region the concentration of ruthenium in the binder of the core region is different from the concentration of ruthenium in the surface region. In this way, characteristics of different regions of an insert according to the present disclosure may be optimized to address the conditions to which the regions are subjected during use of the insert to machine materials. Therefore, for example, composite indexable carbide cutting tool inserts made according to the present disclosure may be designed to achieve the objectives of reduced manufacturing cost (through a reduction in overall ruthenium content relative to monolithic inserts) and improved machining performance (by tailoring one or more characteristics of core and surface regions, for example).

Certain embodiments of cutting tools and cutting tool inserts according to the present disclosure may comprise a coating applied by, for example, PVD and/or CVD methods. Embodiments of coatings may include, for example, at least one of a metal carbide, a metal nitride, a metal boride, and a metal oxide of a metal selected from groups IIIA, IVB, VB, and VIB of the periodic table. More specific non-limiting examples of coatings that may be included on, for example, cutting tools and cutting tool inserts according to the present disclosure include hafnium carbon nitride and, for example, may also comprise one or more of titanium nitride (TiN), titanium carbonitride (TiCN), titanium carbide (TiC), titanium aluminum nitride (TiAIN), titanium aluminum nitride plus carbon (TiAIN+C), aluminum titanium nitride (AlTiN), aluminum titanium nitride plus carbon (AlTiN+C), titanium aluminum nitride plus tungsten carbide/carbon (TiAIN+WC/C), aluminum titanium nitride (AlTiN), aluminum titanium nitride plus carbon (AlTiN+C), aluminum titanium nitride plus tungsten carbide/carbon (AlTiN+WC/C), aluminum oxide (Al₂O₃), α-alumina oxide, titanium diboride (TiB₂), tungsten carbide carbon (WC/C), chromium nitride (CrN), aluminum chromium nitride (AlCrN), hafnium carbon nitride (HfCN), zirconium nitride (ZrN), zirconium carbon nitride (ZrCN), boron nitride (BN), and boron carbon nitride (BCN).

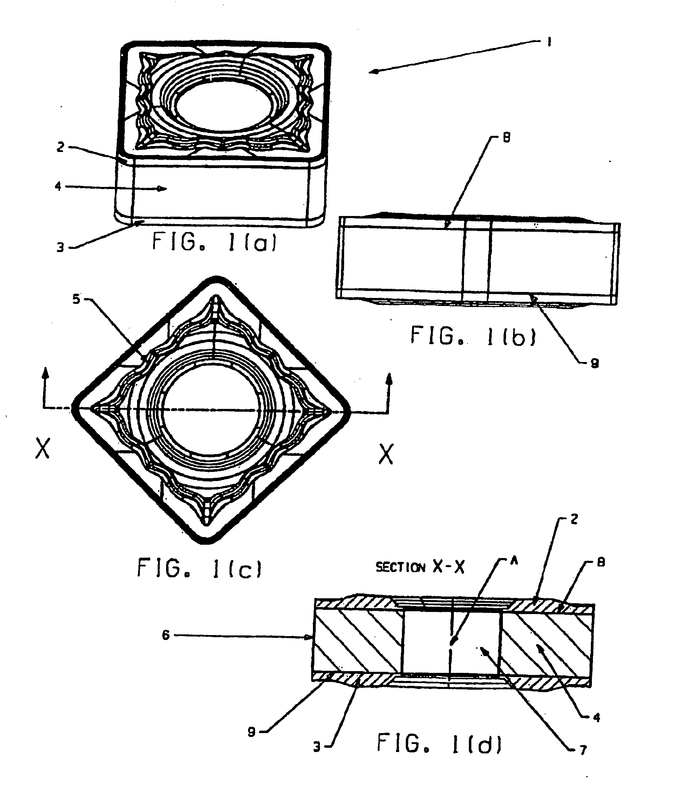

An example of one embodiment of a cutting tool insert according to the present disclosure is shown in Figures 1 a through 1 d. Cutting tool insert 1 has eight indexable positions (four on each side). Figure 1a is a three-dimensional view of an embodiment of a cutting tool insert 1. The top region 2 and the bottom region 3 individually comprise cemented carbides including ruthenium in the binder of each region. The cemented carbides of regions 2 and 3 may be the same or different. The middle region 4 is a cemented carbide material that is a different grade than the cemented carbide material in top region 2 and bottom region 3 and includes binder either lacking or including a relatively low concentration of ruthenium. The cutting tool insert 1 has a built-in or pressed-in chip breaker geometry 5 that may be designed to improve machining of a specific group of materials under certain cutting conditions. Figure 1b is a front view of cutting tool insert 1; Figure 1c is a top view of cutting tool insert 1; and Figure 1d is a cross-sectional view of cutting tool insert 1. Cutting tool insert 1 is a type of insert having a straight side wall 6 and a center hole 7. The center hole 7 may be used to fix the cutting tool insert 1 in a cutting tool holder. Regions 2, 3, and 4 are shown to have boundaries 8 and 9 that are generally perpendicular to the center axis A of center hole 7. However, such regions may have any geometry desired by the cutting tool designer, In producing cutting tool insert 1, the top and bottom punches of a carbide pressing apparatus may move together in a direction substantially parallel to center axis A.

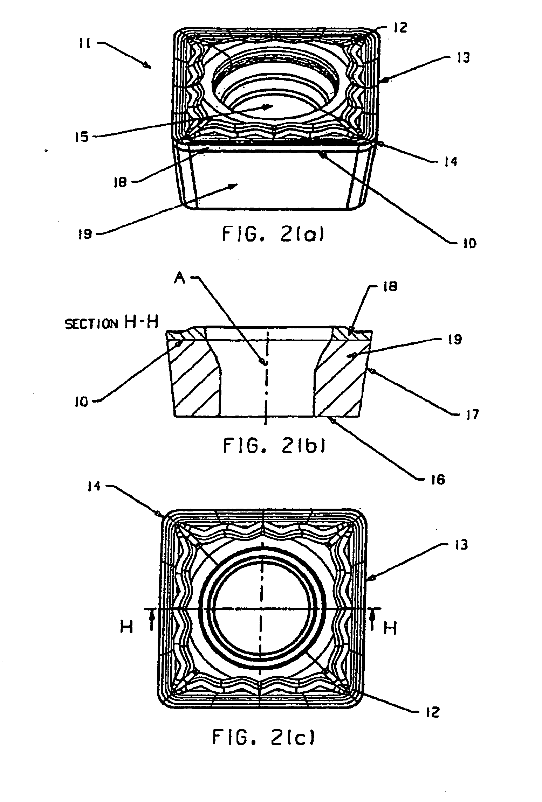

Figures 2a through 2c illustrate a composite indexable cutting tool insert 11 according to the present disclosure having a square shape with built-in chip breakers 12 on the top side, four cutting edges 13, four round cutting edges 14, and a center hole 15. The cutting insert 11 may be indexed four times. Figure 2a is a three-dimensional view of cutting tool insert 11 in which top region 18 includes a first carbide grade, bottom region 19 includes a second carbide grade, and wherein the first carbide grade and the second carbide grade differ in concentration of ruthenium in their respective binders. The built-in or pressed-in chip breaker geometry 12 is designed to improve machining for a specific group of materials under certain cutting conditions. Figure 2b is a cross-sectional view of cutting tool insert 11, and Figure 2c is a top view of cutting tool insert 11. Such cutting tool inserts may have an angled side wall 17. Regions 18 and 19 are shown to have a common boundary 10 that is generally perpendicular to the central axis A of center hole 15. However, such regions may have any geometry desired by the cutting tool designer.

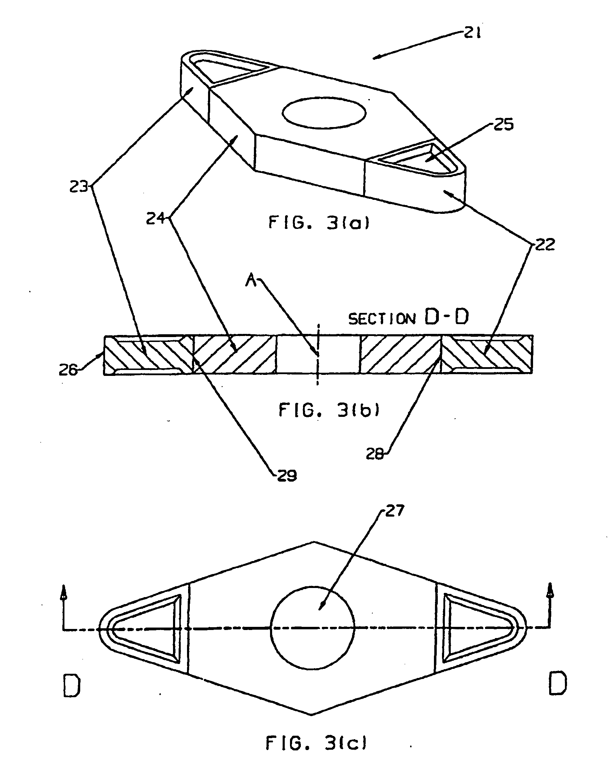

Embodiments of composite carbide indexable cutting tool inserts are not limited to cutting tool inserts 1 and 11 shown in Figures 1a-d and 2a-c. In the following Figures 3a through 5d, additional non-limiting examples of possible composite cemented carbide cutting inserts according to the present disclosure are shown. Any of the embodiments according to the present disclosure shown herein may comprise different composite materials in different regions.

Figures 3a through 3c depict aspects of a composite indexable cutting tool insert 21 with built-in chip breakers 25 on both the top and bottom sides. The cutting tool insert 21 has a diamond shape and can be indexed four times (two times on each side). Figure 3a is a perspective view of insert 21 wherein one entire corner region 22 and another entire corner region 23 comprises a cemented carbide material including ruthenium in the binder, and a center region 24 comprises a second cemented carbide material having no ruthenium or a substantially lower concentration of ruthenium in the binder. Cutting tool insert 21 has a built-in or pressed-in chip breaker geometry 25 that is designed to machine a specific group of metallic materials under certain cutting conditions. Figure 3b is the cross-sectional view of cutting insert 21; and Figure 3c is a top view of cutting insert 21. This type of cutting insert has a straight side wall 26 and a center hole 27. There are two boundaries 28 and 29, which may be described as substantially parallel to axial line A of the center hole 27, between center region 24 and corner regions 23 and 25.

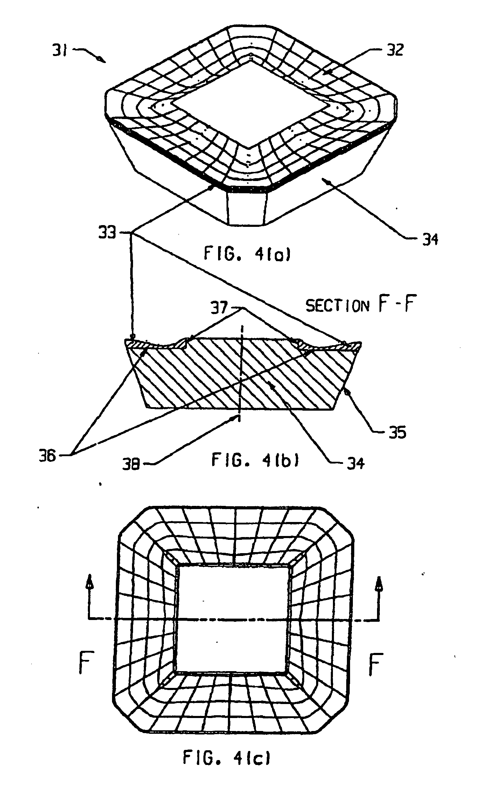

A further embodiment of a cutting tool insert according to the present disclosure is shown in Figures 4a through 4c. Composite indexable cutting insert 31 does not have a center hole, but does include built-in chip breakers 32 on a top surface thereof. The cutting tool insert 31 may be indexed four times. Figure 4a is a perspective view of cutting insert 31. The partial top region 33 near the periphery comprises a first composite material comprising ruthenium in the binder. The remainder of the cutting insert body region 34 (from the top center portion to entire bottom region) contains a second composite material without ruthenium in the binder. Figure 4b is a front view of the cutting tool insert 31, and Figure 4c is a top view of the cutting tool insert 31. This type of cutting insert may have an angled side wall 35. The boundary 36 in this embodiment is substantially perpendicular to axial line 38, and the boundary 37 is substantially parallel to axial line 38.

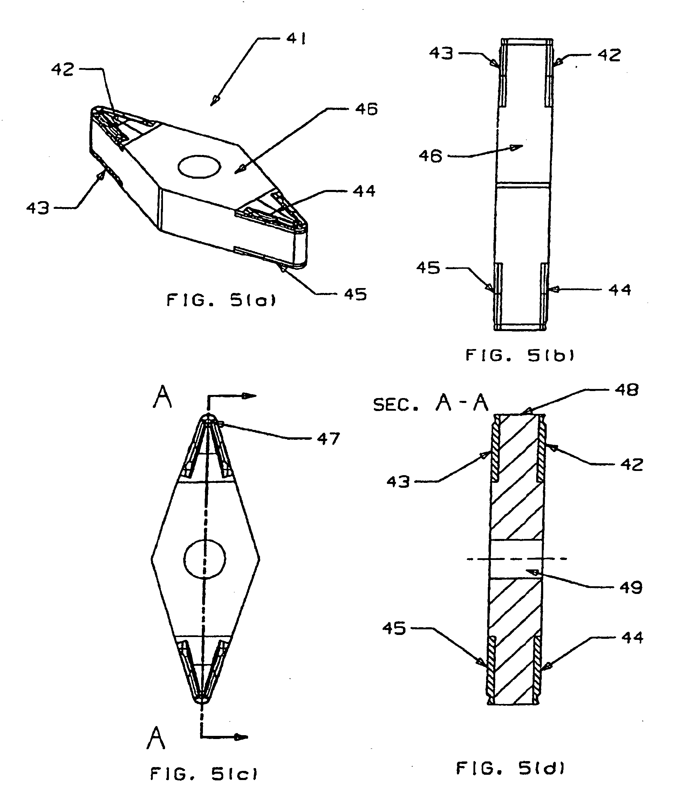

Figures 5a through 5d depict a further embodiment of a composite indexable cutting tool insert according to the present disclosure, with built-in chip breakers on both top and bottom sides. The cutting insert 41 has a diamond shape and may be indexed four times (two times on each side). As shown in Figure 5a, the cutting insert may include a substantially identical ruthenium featured carbide composite material at cutting portions at the four corner regions 42, 43, 44 and 45, and a second carbide composite material having a different concentration of ruthenium in the binder in the body region 46. The cutting tool insert 41 has a built-in or pressed-in chip breaker geometry 47 that may be designed to machine a specific group of materials under certain cutting conditions. Figure 5b is a front view of cutting insert 41; Figure 5c is a top view of cutting tool insert 41; and Figure 5d is a cross-sectional view of cutting tool insert 41. Cutting tool insert 41 has a straight side wall 48 and a center hole 49.

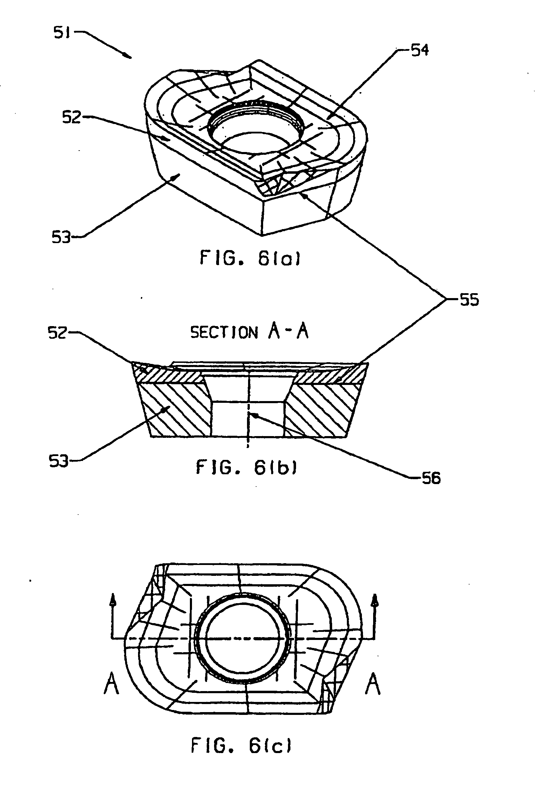

It should be emphasized that the shape of indexable cutting tool inserts according to the present disclosure may be any positive or negative geometrical style known to those of ordinary skill, and optionally may include any desired chip forming geometry. Figures 6a through 9c provide further non-limiting examples of different geometric shapes of cutting tool inserts that may be produced according to the present disclosure.

Figures 6a through 6c show an irregular-shaped milling insert 51 according to the present disclosure including two different composite materials: a ruthenium featured carbide material 52, and a non-ruthenium featured carbide material 53. The cutting tool insert 51 has a built-in or pressed-in chip breaker geometry 54. The boundary 55 between the ruthenium featured carbide material 52 and the non-ruthenium featured carbide material 53 is generally perpendicular to the axis 56 of pressing of the powder grades when forming the insert 51.

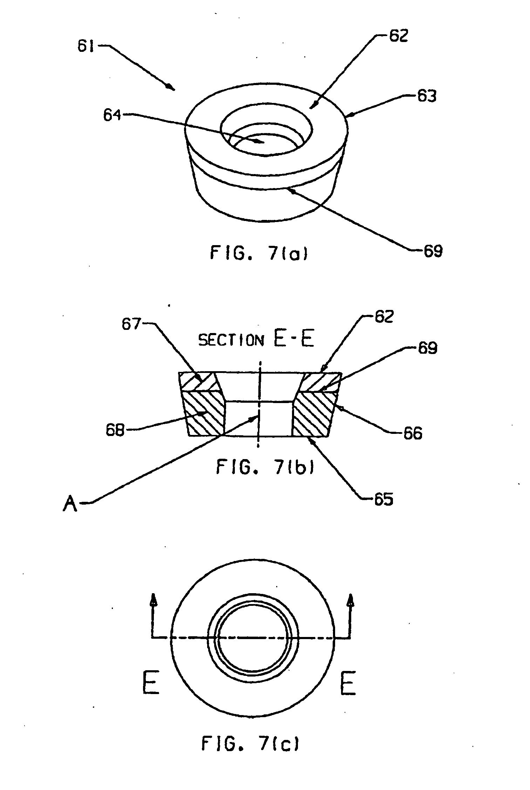

Figures 7a through 7c illustrate a round shape general purpose cutting tool insert 61 with two different carbide materials 67 and 68. The cutting insert 61 has a flat top surface 62. Figure 7b is a cross-sectional view of cutting insert 61 taken at section E-E of the top view shown in Figure 7c. Cutting insert 61 additionally comprises a bottom face 65 and angled side wall 66. The general boundary 69 is between the ruthenium featured carbide material 67 and the non-ruthenium featured carbide material 68. The consistency of the boundary 69 is dependent on the manufacturing process and is not critical to the invention. However, the boundary 69 is generally perpendicular to the axis A of pressing of the powdered materials during fabrication of the insert 61 by press-and-sinter techniques.

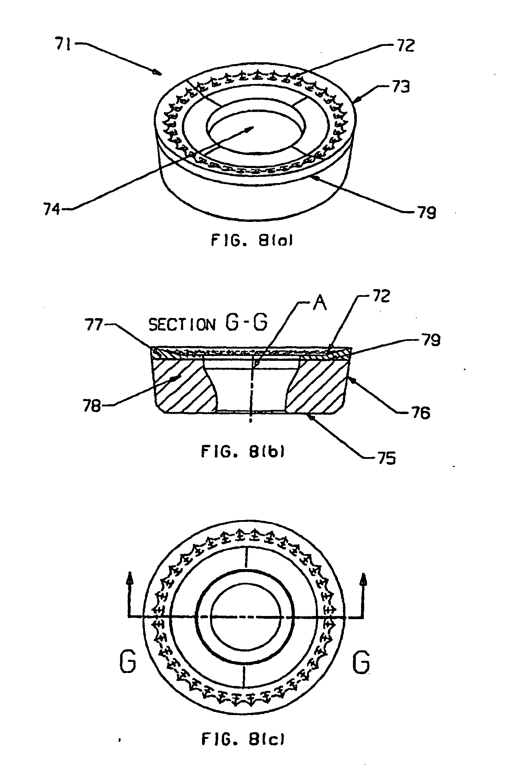

Figures 8a through 8c show a round shape general purpose cutting tool insert 71 according to the present disclosure, with two regions 77 and 78. The cutting insert 71 has a built-in or pressed-in chip breaker geometry 72, cutting edge 73, center hole 74, bottom face 75, and angled wall 76. Region 77 comprises a ruthenium featured carbide material, and region 78 comprises a non-ruthenium featured carbide material. Boundary 79 is shown perpendicular to axial line A. it will be understood, however, there may not be a clear and consistent boundary between regions 77 and 78 due to, for example, mixing and/or diffusion at boundary 79.

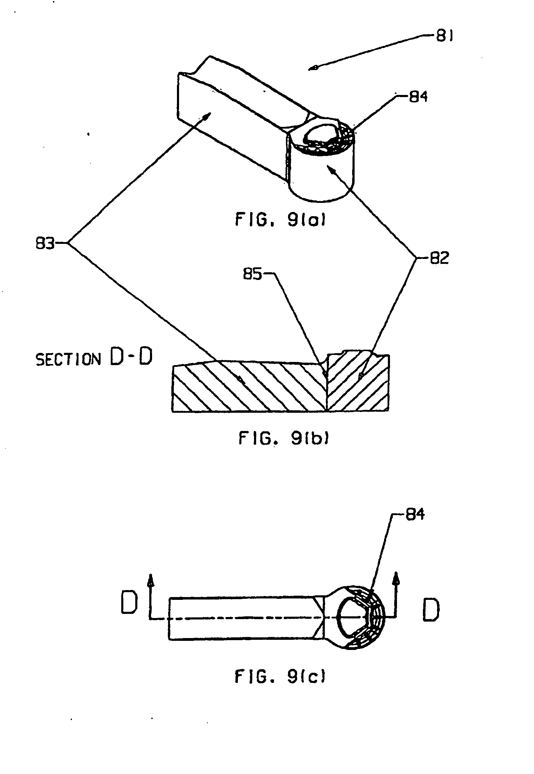

Figures 9a through 9c show a composite grooving or cut-off cutting tool insert 81 according to the present disclosure including a ruthenium featured carbide 82 and a non-ruthenium featured carbide 83. The cutting tool insert 81 has a built-in or pressed-in chip breaker geometry 84. Boundary 85 is between the ruthenium featured carbide and non-ruthenium featured carbide material. In this embodiment, the boundary 85 is in the same direction as the movement of the top and bottom punches used in a carbide power pressing technique.

Embodiments of composite constructions according to the present disclosure may include relatively complex composite constructions comprising multiple boundaries between regions of different cemented carbide materials. Certain of the boundaries may be substantially perpendicular to the axial line of pressing of the article, while other boundaries may be substantially parallel to the pressing axial line.

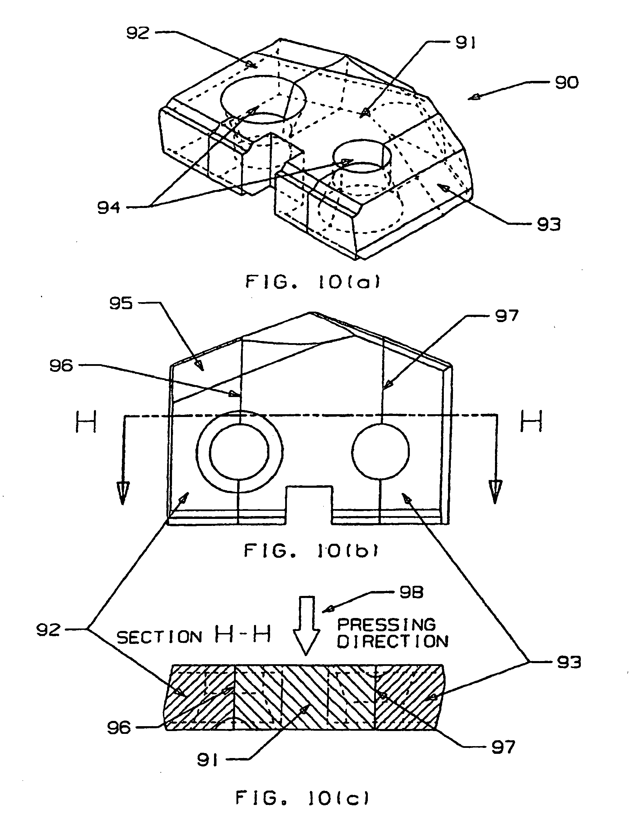

Figures 10a through 10c show an embodiment of a composite spade drill insert 90 according to the present disclosure. Insert 90 has a composite construction of ruthenium featured carbide materials at regions 92 and 93 and a different ruthenium featured carbide material or a non-ruthenium featured carbide material in region 91. The composite cutting tool insert 90 has the shape and geometry of a drilling insert that is usually referred to as a spade drill insert. The composite drilling insert shown in the perspective view of Figure 10a is double-sided, with built-in chip breakers 95 on each side, and two locating holes 94. The boundaries 96 and 97, shown in the top view of Figure 10b and the sectional view of Figure 10c, are boundaries between regions 91 and 92, and between regions 91 and 93, respectively. As shown in Figure 10c, boundaries 96 and 97 are substantially parallel to the powder pressing direction 98.

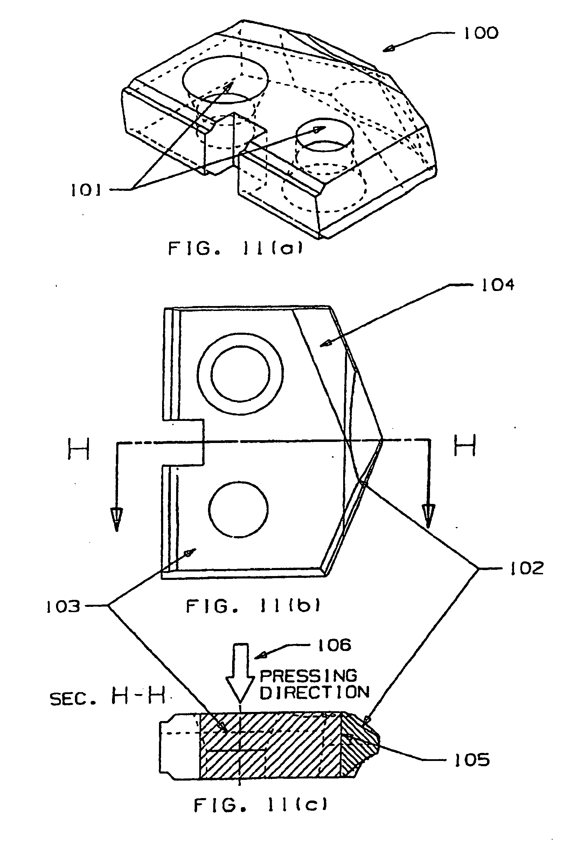

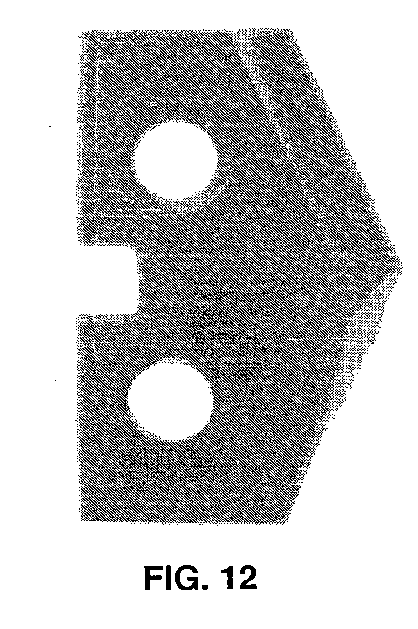

A composite drilling insert may be constructed in different ways depending on the specific drilling applications. Shown in Figures 11 a through 11 c is an embodiment of a drilling insert 100 according to the present disclosure that differs from the embodiment of Figures 10a through 10c. The spade drill insert 100 has two locating holes 101 and built-in chip breakers 104 on both sides. As compared with that the embodiment of Figures 10a-c, the composite construction of insert 100 has only one boundary 105 that separates the tool tip region 102, comprising a ruthenium featured carbide material, and the region 103, comprising a non-ruthenium featured carbide material. The boundary 105, as shown in the cross-section of Figure 11c, is substantially parallel to the powder pressing direction 106. Figure 12 is a photo of a manufactured sample spade drill having the composite construction shown generally in Figures 11a-c.

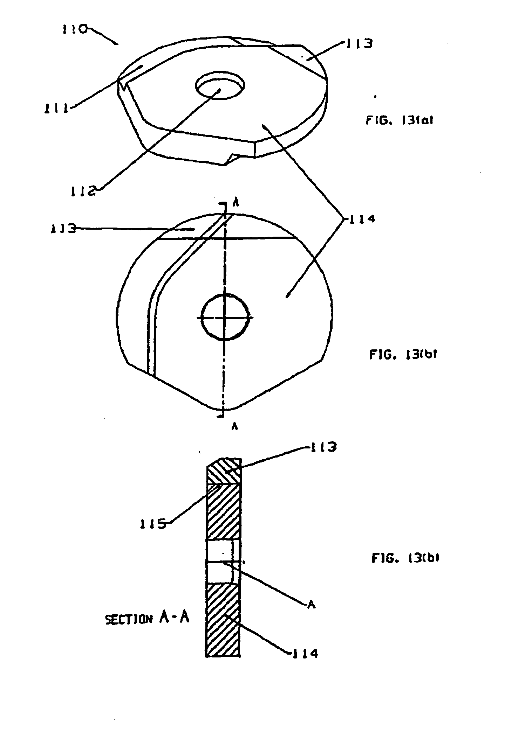

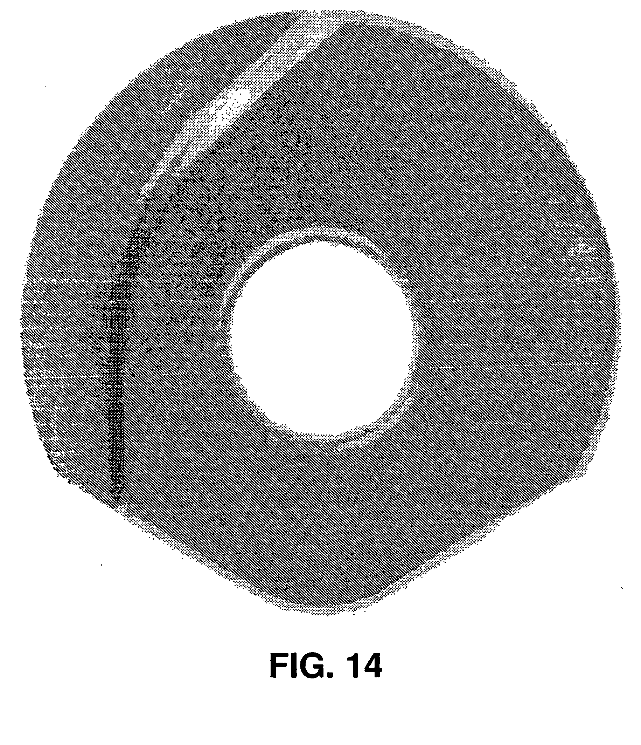

Figures 13a through 13c depict an embodiment of a ball nose cutting insert according to the present disclosure, comprising two regions of composite materials. The ballnose cutting insert 110 includes a region 113 comprising a ruthenium featured carbide, and a region 114 comprising a non-ruthenium featured carbide. The ballnose insert 110 includes a center hole 112 and a chip breaker 111. The boundary 115 separates the region 113 and the region 114 and may be described as substantially parallel to the axial line A of the center hole 112. Figure 14 is a photo of a manufactured sample ball nose cutting insert having the composite construction shown generally in Figures 13a-c.

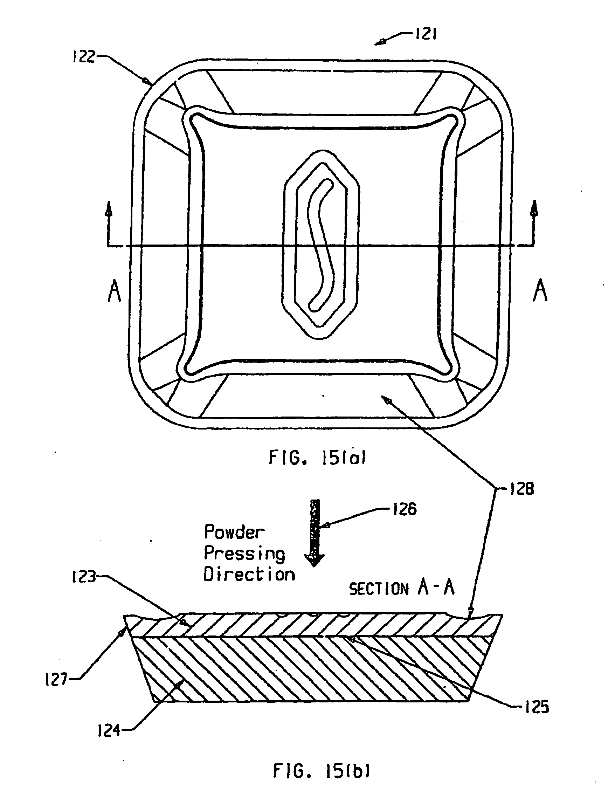

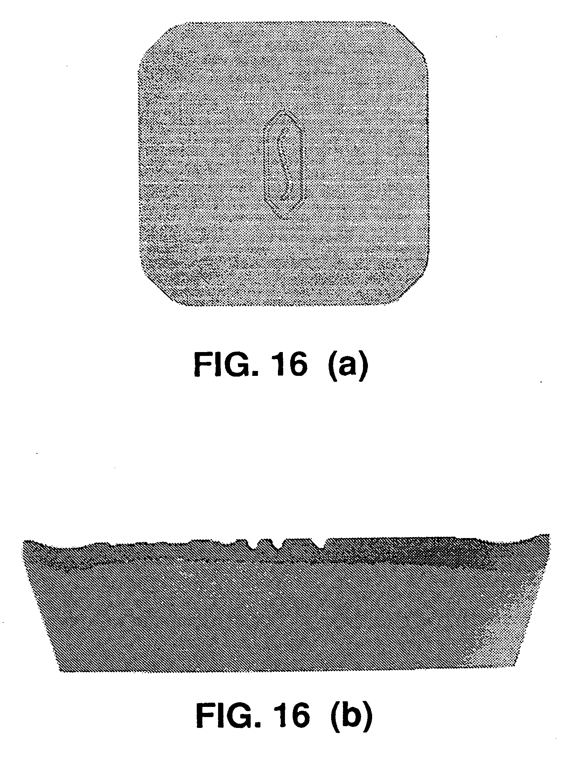

Figures 15a and 15b depict an embodiment of a milling cutting insert according to the present disclosure with a square shape comprising two regions of differing composite materials. The cutting tool insert 121 has four round corners 122, an angled wall 127, and built-in chip breakers 128. Boundary 125 separates the top region 123, containing a ruthenium featured carbide with X44 substrate, and the bottom region 124, containing a non-ruthenium featured carbide with H91 substrate. The boundary 125, as demonstrated in the cross-section of Figure 15b, may be described as substantially perpendicular to the powder pressing direction 126. Figure 16a is a photo and Figure 16b is a section of a sample composite cutting tool insert having the composite construction shown generally in Figures 15a-c. As indicated in the sectioned view of Figure 16b, the insert includes a ruthenium featured carbide with X44 substrate in a top portion, and a non-ruthenium featured carbide with H91 substrate in a bottom portion. The following example provides details of the manufacturing of the composite cutting tool insert shown generally in Figure 15a-c and 16a-b.

### EXAMPLE

According to ISO standards for the substrate grade of carbide cutting tool materials, X44 is close to a tough grade between P25 to P50. Powder ingredients (in weight percentages of total powder weight) for X44 are shown in Table 1. The major ingredients include WC, TiC, TaC, NbC, Co and Ru. Certain typical mechanical properties for the sintered X44 tungsten carbides are also listed in Table 1.

**Table 1 - Ruthenium Featured Carbide X44**

| Chemical Compositions (weight %) | | | | | | Average Grain Size (µm) | Transverse Rupture Strength (N/m-m²) | Density (g/cm²) | Hardness (HV) |
|---|---|---|---|---|---|---|---|---|---|
| WC | TiC | Ta(Nb)C | Cr₃C₂ | Co | Ru | | | | |
| 67.2 | 10 | 9 | 0 | 12 | 1.80 | 1-2 | 2300 | 11.70 | 1500 |

The non-ruthenium featured carbide H91 is a tough milling grade. Powder ingredients for H91 are shown in Table 2. H91 is a carbide substrate without ruthenium. Certain mechanical properties for the sintered H91 tungsten carbides are also listed in Table 2.

**Table 2 - Non-Ruthenium Featured Carbide H91**

| Chemical Compositions (weight %) | | | | | | Average Grain Size (µm) | Transverse Rupture Strength (N/m-m²) | Density (g/cm²) | Hardness (HV) |
|---|---|---|---|---|---|---|---|---|---|
| WC | TiC | Ta(Nb)C | Cr₃C₂ | Co | Ru | | | | |
| 87.8 | 0.4 | 0.5 | 0 | 11 | 0 | 3-5 | 2850 | 14.30 | 1350 |

A composite cutting tool insert may be produced combining the ruthenium featured carbide X44 and the non-ruthenium featured carbide H91 according to the composite construction illustrated in Figures 15a and 15b, wherein a top portion of the insert contains X44 substrate and a bottom portion contains H91 substrate. A carbide powder for H91 material is first introduced into a portion of the cavity in a die, and then carbide powder for X44 material is introduced into the cavity to fill up the remainder of the die cavity. The two portions of powdered carbide substrate may then be consolidated to form a composite green compact through either a powder pressing process or a powder injection process. Sintering the compact will form a metallurgically bonded composite article having a top region comprising ruthenium featured carbide X44 and a bottom region comprising non-ruthenium featured carbide H91. The distinct regions of differing carbide materials have differing characteristics, which may be selected based on the intended application for the insert.

It is to be understood that the present description illustrates those aspects of the invention relevant to a clear understanding of the invention. Certain aspects of the invention that would be apparent to those of ordinary skill in the art and that, therefore, would not facilitate a better understanding of the invention have not been presented in order to simplify the present description. Although only a limited number of embodiments of the present invention necessarily are described herein, one of ordinary skill in the art will, upon considering the foregoing description, recognize that many modifications and variations of the invention may be employed. All such variations and modifications of the invention are intended to be covered by the foregoing description and the following claims.

The disclosure further encompasses the following:
1. A composite article, comprising a first composite material and a second composite material, wherein the first composite material and the second composite material individually comprise hard particles in a binder, and wherein a concentration of ruthenium in the binder of the first composite material is different from a concentration of ruthenium in the binder of the second composite material.
4. The composite article of paragraph 1, wherein the binder of the first composite material comprises from 8 weight percent to 20 weight percent ruthenium.
5. The composite article of paragraph 1, wherein a concentration of ruthenium in the binder of the first composite material and a concentration of ruthenium in the binder of the second composite material differ by at least 1 weight percent.
6. The composite article of paragraph 1, wherein a concentration of ruthenium in the binder of the first composite material and a concentration of ruthenium in the binder of the second composite material differ by at least 5 weight percent.
7. The composite article of paragraph 1, wherein a concentration of ruthenium in the binder of the first composite material and a concentration of ruthenium in the binder of the second composite material differ by at least 10 weight percent.
8. The composite article of paragraph 1, wherein the binder of the second composite material either lacks ruthenium or comprises an incidental amount of ruthenium.
9. The composite article of paragraph 1, wherein the hard particles in each of the first composite material and the second composite material independently comprise at least one of a carbide, a nitride, a boride, a silicide, an oxide, and solid solutions thereof, and wherein the binder of the first composite material and the second composite materials independently comprise at least one of cobalt, nickel, iron, ruthenium, palladium, and alloys thereof.
10. The composite article of paragraph 1, wherein the first composite material and the second composite material differ in at least one characteristic selected from the group consisting of composition, grain size, modulus of elasticity, hardness, wear resistance, fracture toughness, tensile strength, corrosion resistance, coefficient of thermal expansion, and coefficient of thermal conductivity.
11. The composite article of paragraph 1, wherein the hard particles of the first composite material and the hard particles of the second composite material are individually selected from titanium carbides, chromium carbides, vanadium carbides, zirconium carbides, hafnium carbides, molybdenum carbides, tantalum carbides, tungsten carbides, and niobium carbides.
12. The composite article of paragraph 1, wherein the binder of the first composite material and the binder of the second composite material each individually comprise at least one metal selected from the group consisting of cobalt, nickel, ruthenium, palladium, and iron.
13. The composite article of paragraph 1, wherein the composite article is selected from the group consisting of a ballnose end mill, a ballnose cutting insert, a milling cutting insert, a spade drill insert, a drilling insert, a turning cutting insert, a grooving insert, a threading insert, a cut-off insert, and a boring insert.
14. The composite article of paragraph 13, wherein the composite article is one of an indexable cutting tool insert and a non-indexable cutting tool insert.
15. The composite article of paragraph 1, wherein the composite article further comprises a boundary between the first composite material and the second composite material.
16. The composite article of paragraph 15, wherein the composite article comprises a boundary between the first composite material and the second composite material that includes at least one of a generally vertical boundary, a generally horizontal boundary, and a curved boundary.
17. The composite article of paragraph 1, wherein the composite article comprises more than one region of at least one of the first composite material and the said second composite material.
18. The composite article of paragraph 1, wherein the composite article is uncoated.
19. The composite article of paragraph 1, wherein at least a region of a surface of the composite article is coated with at least one coating selected from the group consisting of a CVD coating, a PVD coating, a diamond coating, a laser-based coating, and a nanotechnology-based coating.
20. The composite article of paragraph 19, wherein the at least one coating comprises at least one material selected from the group consisting of a metal carbide, a metal nitride, a metal silicide, and a metal oxide, wherein the metal is selected from groups IIIA, IVB, VB, and VIB of the periodic table.
21. The composite article of paragraph 19, wherein the at least one coating comprises a material selected from the group consisting of titanium nitride (TiN), titanium carbon (TiC), titanium carbonitride (TiCN), titanium aluminum nitride (TiAIN), titanium aluminum nitride plus carbon (TiAIN+C), aluminum titanium nitride (AlTiN), aluminum titanium nitride plus carbon (AlTiN+C), titanium aluminum nitride plus tungsten carbide/carbon (TiAIN+WC/C), aluminum titanium nitride (AlTiN), aluminum titanium nitride plus carbon (AlTiN+C), aluminum titanium nitride plus tungsten carbide/carbon (AlTiN+WC/C), aluminum oxide (Al2O3), alpha alumina oxide ([alpha]Al2O3), titanium diboride (TiB2), tungsten carbide carbon (WC/C), chromium nitride (CrN), hafnium carbonitride (HfCN), zirconium nitride (ZrN), zirconium carbon nitride (ZrCN), boron nitride (BN), boron carbon nitride (BCN), and aluminum chromium nitride (AlCrN).
22. The composite article of paragraph 19, wherein the at least one coating comprises multiple layers.
23. The composite article of paragraph 19, wherein the at least one coating comprises at least three layers and wherein at least one layer has a composition that differs from at least one other layer.

## Claims

1. A composite cutting tool for machining of metals and metallic alloys, comprising:
a first region comprising a first composite material; and
a second region metallurgically bonded to the first region and comprising a second composite material;
wherein the first composite material and the second composite material individually comprise hard particles and a binder, wherein the binder of the first composite material comprises from 8 weight percent to 20 weight percent ruthenium, based on the total weight of the binder of the first composite material, and wherein a concentration of ruthenium in the binder of the first composite material and a concentration of ruthenium in the binder of the second composite material differ by at least 1 weight percent.

2. The composite cutting tool of claim 1, wherein the composite cutting tool comprises a cutting tool insert selected from the group consisting of a turning insert, a milling insert, a drilling insert, a reaming insert, a threading insert, a grooving insert, a boring insert, and a tapping insert.

3. The composite cutting tool of claim 1, wherein the composite cutting tool is selected from the group consisting of a ballnose end mill, a ballnose cutting insert, a spade drill insert, and a cut-off cutting insert.

4. The composite cutting tool of claim 1, wherein the composite cutting tool is one of an indexable cutting tool insert and a non-indexable cutting tool insert.

5. The composite cutting tool of claim 1, wherein the binder of the second composite material either lacks ruthenium or comprises an incidental amount of ruthenium.

6. The composite cutting tool of claim 1, wherein the hard particles of the first composite material and the hard particles of the second composite material independently comprise at least one of a carbide, a nitride, a boride, a silicide, an oxide, and solid solutions thereof, and wherein the binder of the first composite material and the binder of the second composite material independently comprise at least one of cobalt, cobalt alloy, nickel, nickel alloy, iron, iron alloy, ruthenium, ruthenium alloy, palladium, and palladium alloy.

7. The composite cutting tool of claim 1, wherein the first composite material and the second composite material differ in at least one characteristic selected from the group consisting of composition, grain size, modulus of elasticity, hardness, wear resistance, fracture toughness, tensile strength, corrosion resistance, coefficient of thermal expansion, and coefficient of thermal conductivity.

8. The composite cutting tool of claim 1, wherein the hard particles of the first composite material and the hard particles of the second composite material are individually selected from the group consisting of titanium carbides, chromium carbides, vanadium carbides, zirconium carbides, hafnium carbides, molybdenum carbides, tantalum carbides, tungsten carbides, and niobium carbides.

9. The composite cutting tool of claim 1, wherein the binder of the first composite material and the binder of the second composite material each individually comprise at least one metal selected from the group consisting of cobalt, nickel, ruthenium, palladium, and iron.

10. The composite cutting tool of claim 1, wherein at least a region of a surface of the composite cutting tool is coated with at least one coating selected from the group consisting of a CVD coating, a PVD coating, a diamond coating, a laser-based coating, and a nanotechnology-based coating.

11. The composite cutting tool of claim 10, wherein the at least one coating comprises at least one material selected from the group consisting of a metal carbide, a metal nitride, a metal silicide, and a metal oxide, wherein the metal is selected from groups IIIA, IVB, VB, and VIB of the periodic table.

12. The composite cutting tool of claim 10, wherein the at least one coating comprises a material selected from the group consisting of titanium nitride (TiN), titanium carbon (TiC), titanium carbonitride (TiCN), titanium aluminum nitride (TiAlN), titanium aluminum nitride plus carbon (TiAlN+C), aluminum titanium nitride (AlTiN), aluminum titanium nitride plus carbon (AlTiN+C), titanium aluminum nitride plus tungsten carbide/carbon (TiAlN+WC/C), aluminum titanium nitride (AlTiN), aluminium titanium nitride plus carbon (AlTiN+C), aluminum titanium nitride plus tungsten carbide/carbon (AlTiN+WC/C), aluminum oxide (Al₂O₃), alpha alumina oxide (αAl₂O₃), titanium diboride (TiB₂), tungsten carbide carbon (WC/C), chromium nitride (CrN), hafnium carbonitride (HfCN), zirconium nitride (ZrN), zirconium carbon nitride (ZrCN), boron nitride (BN), boron carbon nitride (BCN), and aluminum chromium nitride (AlCrN).

13. The composite cutting tool of claim 10, wherein the at least one coating comprises multiple layers.

14. The composite cutting tool of claim 10, wherein the at least one coating comprises at least three layers and wherein at least one layer has a composition that differs from at least one other layer.

15. The composite cutting tool of claim 1, wherein the composite cutting tool is an indexable cutting insert comprising:
a top region consisting of the first composite material and including a cutting edge; and
a bottom region consisting of the second composite material and metallurgically bonded to the top region.

16. The composite cutting tool of claim 1, wherein the composite cutting tool is an indexable cutting tool insert comprising:
a top region consisting of the first composite material and including a cutting edge;
a bottom region consisting of the first composite material and including a cutting edge; and
a middle region consisting of the second composite material and metallurgically bonded to the top region and the bottom region.

17. The composite cutting tool of claim 1, wherein the composite cutting tool is a drilling insert comprising:
a first side region consisting of the first composite material and including a cutting edge;
a second side region consisting of the first composite material and including a cutting edge; and
a tip region consisting of the second composite material and metallurgically bonded to the first side region and the second side region.

18. The composite cutting tool of claim 1, wherein the composite cutting tool is a cutting tool insert selected from the group consisting of indexable turning inserts, indexable milling inserts, and indexable drilling inserts, the cutting tool insert comprising:
a first region consisting of a first cemented carbide composite material and including a cutting edge; and
a second region metallurgically bonded to the first region and consisting of a second cemented carbide composite material;
wherein the first cemented carbide composite material and the second cemented carbide composite material individually comprise carbide particles in a binder, wherein the binder of the first cemented carbide composite material comprises 8 weight percent to 20 weight percent ruthenium, and wherein the binder of the second cemented carbide composite material either lacks ruthenium or comprises an incidental amount of ruthenium.

19. The composite cutting tool of claim 1, wherein the composite cutting tool is a cutting tool insert selected from the group consisting of end mill inserts and spade drill inserts, the cutting tool insert comprising:
a first region consisting of a first cemented carbide composite material and including a cutting edge; and
a second region metallurgically bonded to the first region and consisting of a second cemented carbide composite material;
wherein the first cemented carbide composite material and the second cemented carbide composite material individually comprise carbide particles in a binder, wherein the binder of the first cemented carbide composite material comprises 8 weight percent to 20 weight percent ruthenium, and wherein the binder of the second cemented carbide composite material either lacks ruthenium or comprises an incidental amount of ruthenium.

## Patentansprüche

1. Verbundschneidwerkzeug zur spanenden Bearbeitung von Metallen und Metalllegierungen, umfassend:
einen ersten Bereich, der ein erstes Verbundmaterial umfasst, und
einen zweiten Bereich, der metallurgisch an den ersten Bereich gebunden ist und ein zweites Verbundmaterial umfasst,
wobei das erste Verbundmaterial und das zweite Verbundmaterial individuell harte Teilchen und ein Bindemittel umfassen, wobei das Bindemittel des ersten Verbundmaterials 8 Gew.-% bis 20 Gew.-% Ruthenium, bezogen auf das Gesamtgewicht des Bindemittels des ersten Verbundmaterials, umfasst, und wobei sich die Rutheniumkonzentration in dem Bindemittel des ersten Verbundmaterials und die Rutheniumkonzentration in dem Bindemittel des zweiten Verbundmaterials um mindestens 1 Gew.-% unterscheiden.

2. Verbundschneidwerkzeug nach Anspruch 1, wobei das Verbundschneidwerkzeug einen Schneidwerkzeugeinsatz umfasst, der aus der Gruppe von einem Dreheinsatz, einem Fräseinsatz, einem Bohreinsatz, einem Reibeinsatz, einem Gewindeschneideinsatz, einem Einstecheinsatz, einem Aufweiteinsatz und einem Gewindebohreinsatz ausgewählt ist.

3. Verbundschneidwerkzeug nach Anspruch 1, wobei das Verbundschneidwerkzeug aus der Gruppe von einem Radiusfräser, einem Kugelstirn-Schneideinsatz, einem Spitzbohreinsatz und einem Stechdreheinsatz ausgewählt ist.

4. Verbundschneidwerkzeug nach Anspruch 1, wobei das Verbundschneidwerkzeug ein Wende-Schneidwerkzeugeinsatz oder ein Nicht-Wende-Schneidwerkzeugeinsatz ist.

5. Verbundschneidwerkzeug nach Anspruch 1, wobei das Bindemittel des zweiten Verbundmaterials entweder kein Ruthenium aufweist oder eine beiläufige Menge an Ruthenium umfasst.

6. Verbundschneidwerkzeug nach Anspruch 1, wobei die harten Teilchen des erste Verbundmaterials und die harten Teilchen des zweiten Verbundmaterials unabhängig voneinander mindestens eine Komponente von einem Carbid, einem Nitrid, einem Borid, einem Silicid, einem Oxid und Mischkristallen hiervon umfassen und wobei das Bindemittel des ersten Verbundmaterials und das Bindemittel des zweiten Verbundmaterials unabhängig voneinander mindestens eine Komponente von Kobalt, einer Kobaltlegierung, Nickel, einer Nickellegierung, Eisen, einer Eisenlegierung, Ruthenium, einer Rutheniumlegierung, Palladium und einer Palladiumlegierung umfassen.

7. Verbundschneidwerkzeug nach Anspruch 1, wobei sich das erste Verbundmaterial und das zweite Verbundmaterial in mindestens einer Eigenschaft unterscheiden, die aus der Gruppe von Zusammensetzung, Korngröße, Elastizitätsmodul, Härte, Verschleißbeständigkeit, Bruchzähigkeit, Zugfestigkeit, Korrosionsbeständigkeit, Wärmeausdehnungskoeffizient und Wärmeleitfähigkeitskoeffizient ausgewählt ist.

8. Verbundschneidwerkzeug nach Anspruch 1, wobei die harten Teilchen des ersten Verbundmaterials und die harten Teilchen des zweiten Verbundmaterials individuell aus der Gruppe von Titancarbiden, Chromcarbiden, Vanadiumcarbiden, Zirconiumcarbiden, Hafniumcarbiden, Molybdäncarbiden, Tantalcarbiden, Wolframcarbiden und Niobiumcarbiden ausgewählt sind.

9. Verbundschneidwerkzeug nach Anspruch 1, wobei das Bindemittel des ersten Verbundmaterials und das Bindemittel des zweiten Verbundmaterials jeweils individuell mindestens ein Metall umfassen, das aus der Gruppe von Kobalt, Nickel, Ruthenium, Palladium und Eisen ausgewählt ist.

10. Verbundschneidwerkzeug nach Anspruch 1, wobei mindestens ein Bereich einer Oberfläche des Verbundschneidwerkzeugs mit mindestens einer Beschichtung beschichtet ist, die aus der Gruppe von einer CVD-Beschichtung, einer PVD-Beschichtung, einer Diamantbeschichtung, einer Beschichtung auf Laserbasis und einer Beschichtung auf Nanotechnologiebasis ausgewählt ist.

11. Verbundschneidwerkzeug nach Anspruch 10, wobei die mindestens eine Beschichtung mindestens ein Material umfasst, das aus der Gruppe von einem Metallcarbid, einem Metallnitrid, einem Metallsilicid und einem Metalloxid ausgewählt ist, wobei das Metall aus den Gruppen IIIA, IVB, VB und VIB des Periodensystems ausgewählt ist.

12. Verbundschneidwerkzeug nach Anspruch 10, wobei die mindestens eine Beschichtung ein Material umfasst, das aus der Gruppe von Titannitrid (TiN), Titancarbid (TiC), Titancarbonitrid (TiCN), Titanaluminiumnitrid (TiAlN), Titanaluminiumnitrid plus Kohlenstoff (TiAlN+C), Aluminiumtitannitrid (AlTiN), Aluminiumtitannitrid plus Kohlenstoff (AlTiN+C), Titanaluminiumnitrid plus Wolframcarbid/Kohlenstoff (TiAlN+WC/C), Aluminiumtitannitrid (AlTiN), Aluminiumtitannitrid plus Kohlenstoff (AlTiN+C), Aluminiumtitannitrid plus Wolframcarbid/Kohlenstoff (AlTiN+WC/C), Aluminiumoxid (Al₂O₃), alpha-Aluminiumoxid (α-Al₂O₃), Titandiborid (TiB₂), Wolframcarbid/Kohlenstoff (WC/C), Chromnitrid (CrN), Hafniumcarbonitrid (HfCN), Zirconiumnitrid (ZrN), Zirconiumcarbonitrid (ZrCN), Bornitrid (BN), Borcarbonitrid (BCN) und Aluminiumchromnitrid (AlCrN) ausgewählt ist.

13. Verbundschneidwerkzeug nach Anspruch 10, wobei die mindestens eine Beschichtung mehrere Schichten umfasst.

14. Verbundschneidwerkzeug nach Anspruch 10, wobei die mindestens eine Beschichtung mindestens drei Schichten umfasst und wobei mindestens eine Schicht eine Zusammensetzung aufweist, die von mindestens einer anderen Schicht verschieden ist.

15. Verbundschneidwerkzeug nach Anspruch 1, wobei das Verbundschneidwerkzeug ein Wende-Schneideinsatz ist mit:
einem oberen Bereich, der aus dem ersten Verbundmaterial besteht und eine Schneidkante umfasst; und
einem unteren Bereich, der aus dem zweiten Verbundmaterial besteht und metallurgisch an den oberen Bereich gebunden ist.

16. Verbundschneidwerkzeug nach Anspruch 1, wobei das Verbundschneidwerkzeug ein Wende-Schneidwerkzeugeinsatz ist mit:
einem oberen Bereich, der aus dem ersten Verbundmaterial besteht und eine Schneidkante umfasst;
einem unteren Bereich, der aus dem ersten Verbundmaterial besteht und eine Schneidkante umfasst; und
einem mittleren Bereich, der aus dem zweiten Verbundmaterial besteht und metallurgisch an den oberen Bereich und den unteren Bereich gebunden ist.

17. Verbundschneidwerkzeug nach Anspruch 1, wobei das Verbundschneidwerkzeug ein Bohreinsatz ist mit:
einem ersten Seitenbereich, der aus dem ersten Verbundmaterial besteht und eine Schneidkante umfasst;
einem zweiten Seitenbereich, der aus dem ersten Verbundmaterial besteht und eine Schneidkante umfasst; und
einem Spitzenbereich, der aus dem zweiten Verbundmaterial besteht und metallurgisch an den ersten Seitenbereich und den zweiten Seitenbereich gebunden ist.

18. Verbundschneidwerkzeug nach Anspruch 1, wobei das Verbundschneidwerkzeug ein Schneidwerkzeugeinsatz ist, der aus der Gruppe von Wende-Dreheinsätzen, Wende-Fräseinsätzen und Wende-Bohreinsätzen ausgewählt ist, wobei der Schneidwerkzeugeinsatz umfasst:
einen ersten Bereich, der aus einem ersten Sinterhartmetall-Verbundmaterial besteht und eine Schneidkante umfasst; und
einen zweiten Bereich, der metallurgisch an den ersten Bereich gebunden ist und aus einem zweiten Sinterhartmetall-Verbundmaterial besteht;
wobei das erste Sinterhartmetall-Verbundmaterial und das zweite Sinterhartmetall-Verbundmaterial individuell Carbidteilchen in einem Bindemittel umfassen, wobei das Bindemittel des ersten Sinterhartmetall-Verbundmaterials 8 Gew.-% bis 20 Gew.-% Ruthenium umfasst und wobei das Bindemittel des zweiten Sinterhartmetall-Verbundmaterials entweder kein Ruthenium aufweist oder eine beiläufige Menge an Ruthenium umfasst.

19. Verbundschneidwerkzeug nach Anspruch 1, wobei das Verbundschneidwerkzeug ein Schneidwerkzeugeinsatz ist, der aus der Gruppe von Stirnfräseinsätzen und Spitzbohreinsätzen ausgewählt ist, wobei der Schneidwerkzeugeinsatz umfasst:
einen ersten Bereich, der aus einem ersten Sinterhartmetall-Verbundmaterial besteht und eine Schneidkante umfasst; und
einen zweiten Bereich, der metallurgisch an den ersten Bereich gebunden ist und aus einem zweiten Sinterhartmetall-Verbundmaterial besteht;
wobei das erste Sinterhartmetall-Verbundmaterial und das zweite Sinterhartmetall-Verbundmaterial individuell Carbidteilchen in einem Bindemittel umfassen, wobei das Bindemittel des ersten Sinterhartmetall-Verbundmaterials 8 Gew.-% bis 20 Gew.-% Ruthenium umfasst und wobei das Bindemittel des zweiten Sinterhartmetall-Verbundmaterials entweder kein Ruthenium aufweist oder eine beiläufige Menge an Ruthenium umfasst.

## Revendications

1. Outil de coupe composite pour l'usinage des métaux et des alliages métalliques, comprenant :
une première région constituée d'un premier matériau composite ; et
une seconde région liée métallurgiquement à la première région et constituée d'un second matériau composite,
dans lequel le premier matériau composite et le second matériau composite comprennent individuellement des particules dures et un liant, dans lequel le liant du premier matériau composite comprend de 8 pour cent en poids à 20 pour cent en poids de ruthénium sur la base du poids total du liant du premier matériau composite, et dans lequel une concentration de ruthénium dans le liant du premier matériau composite et une concentration de ruthénium dans le liant du second matériau composite diffèrent d'au moins 1 pour cent en poids.

2. Outil de coupe composite selon la revendication 1, dans lequel l'outil de coupe composite comprend une plaquette d'outil de coupe choisie dans le groupe constitué par une plaquette rotative, une plaquette de fraisage, une plaquette de forage, une plaquette d'ajustage, une plaquette de filetage, une plaquette de rainurage, une plaquette d'alésage et une plaquette de taraudage.

3. Outil de coupe composite selon la revendication 1, dans lequel l'outil de coupe composite est choisi dans le groupe constitué par une fraise à bout sphérique, une plaquette de coupe à bout sphérique, une plaquette de forage à langue d'aspic et une plaquette de découpage.

4. Outil de coupe composite selon la revendication 1, dans lequel l'outil de coupe composite est l'une d'une plaquette d'outil de coupe indexable et d'une plaquette d'outil de coupe non indexable.

5. Outil de coupe composite selon la revendication 1, dans lequel le liant du second matériau composite est dénué de ruthénium ou comprend une quantité accessoire de ruthénium.

6. Outil de coupe composite selon la revendication 1, dans lequel les particules dures du premier matériau composite et les particules dures du second matériau composite comprennent indépendamment au moins un parmi un carbure, un nitrure, un borure, un siliciure, un oxyde et des solutions solides de ceux-ci, et dans lequel le liant du premier matériau composite et le liant du second matériau composite comprennent indépendamment au moins un parmi du cobalt, un alliage de cobalt, du nickel, un alliage de nickel, du fer, un alliage de fer, du ruthénium, un alliage de ruthénium, du palladium et un alliage de palladium.

7. Outil de coupe composite selon la revendication 1, dans lequel le premier matériau composite et le second matériau composite diffèrent dans au moins une caractéristique choisie dans le groupe constitué par la composition, la grosseur du grain, le module d'élasticité, la dureté, la résistance à l'usure, la ténacité à la rupture, la résistance à la traction, la résistance à la corrosion, le coefficient de dilatation thermique et le coefficient de conductivité thermique.

8. Outil de coupe composite selon la revendication 1, dans lequel les particules dures du premier matériau composite et les particules dures du second matériau composite sont choisies individuellement dans le groupe constitué par les carbures de titane, les carbures de chrome, les carbures de vanadium, les carbures de zirconium, les carbures d'hafnium, les carbures de molybdène, les carbures de tantale, les carbures de tungstène et les carbures de niobium.

9. Outil de coupe composite selon la revendication 1, dans lequel le liant du premier matériau composite et le liant du second matériau composite comprennent chacun individuellement au moins un métal choisi dans le groupe constitué par le cobalt, le nickel, le ruthénium, le palladium et le fer.

10. Outil de coupe composite selon la revendication 1, dans lequel au moins une région d'une surface de l'outil de coupe composite est revêtue avec au moins un revêtement choisi dans le groupe constitué par un revêtement CVD, un revêtement PVD, un revêtement de diamant, un revêtement au laser et un revêtement nanotechnologique.

11. Outil de coupe composite selon la revendication 10, dans lequel le au moins un revêtement comprend au moins un matériau choisi dans le groupe constitué par un carbure métallique, un nitrure métallique, un siliciure métallique et un oxyde métallique, le métal étant choisi dans le groupe IIIA, IVB, VB et VIB du tableau périodique.

12. Outil de coupe composite selon la revendication 10, dans lequel le au moins un revêtement comprend un matériau choisi dans le groupe constitué par le nitrure de titane (TiN), le carbure de titane (TiC), le carbonitrure de titane (TiCN), le nitrure de titane et d'aluminium (TiAlN), le nitrure de titane et d'aluminium plus carbone (TiAlN+C), le nitrure d'aluminium et de titane (AlTiN), le nitrure d'aluminium et de titane plus carbone (AlTiN+C), le nitrure de titane et d'aluminium plus carbure de tungstène/carbone (TiAlN+WC/C), le nitrure d'aluminium et de titane (AlTiN), le nitrure d'aluminium et de titane plus carbone (AlTiN+C), le nitrure d'aluminium et de titane plus carbure de tungstène/carbone (AlTiN+WC/C), l'oxyde d'aluminium (Al₂O₃), l'oxyde d'alpha alumine (αAl₂O₃), le diborure de titane (TiB₂), le carbure de tungstène/carbone (WC/C), le nitrure de chrome (CrN), le carbonitrure d'hafnium (HfCN), le nitrure de zirconium (ZrN), le nitrure de zirconium et de carbone (ZrCN), le nitrure de bore (BN), le nitrure de carbone et de bore (BCN) et le nitrure d'aluminium et de chrome (AlCrN).

13. Outil de coupe composite selon la revendication 10, dans lequel le au moins un revêtement comprend de multiples couches.

14. Outil de coupe composite selon la revendication 10, dans lequel le au moins un revêtement comprend au moins trois couches et dans lequel au moins une couche a une composition qui diffère d'au moins une autre couche.

15. Outil de coupe composite selon la revendication 1, dans lequel l'outil de coupe composite est une plaquette d'outil de coupe indexable comprenant :
une région supérieure constituée du premier matériau composite et comprenant une arête coupante ; et
une région inférieure constituée du second matériau composite et liée métallurgiquement à la région supérieure.

16. Outil de coupe composite selon la revendication 1, dans lequel l'outil de coupe composite est une plaquette d'outil de coupe indexable comprenant :
une région supérieure constituée du premier matériau composite et comprenant une arête coupante ;
une région inférieure constituée du premier matériau composite et comprenant une arête coupante ; et
une région intermédiaire constituée du second matériau composite et liée métallurgiquement à la région supérieure et à la région inférieure.

17. Outil de coupe composite selon la revendication 1, dans lequel l'outil de coupe composite est une plaquette de forage comprenant :
une première région latérale constituée du premier matériau composite et comprenant une arête tranchante ;
une seconde région latérale constituée par le premier matériau composite et comprenant une arête coupante ; et
une région de pointe constituée du second matériau composite et liée métallurgiquement à la première région latérale et à la seconde région latérale.

18. Outil de coupe composite selon la revendication 1, dans lequel l'outil de coupe composite est une plaquette d'outil de coupe choisie dans le groupe constitué par des plaquettes rotatives indexables, des plaquettes de fraisage indexables et des plaquettes de forage indexables, la plaquette d'outil de coupe comprenant :
une première région constituée d'un premier matériau composite de carbure cémenté et comprenant une arête coupante ; et
une seconde région liée métallurgiquement à la première région et constitué d'un second matériau composite de carbure cémenté ;
dans lequel le premier matériau composite de carbure cémenté et le second matériau composite de carbure cémenté comprennent individuellement des particules de carbure dans un liant, dans lequel le liant du premier matériau composite de carbure cémenté comprend de 8 pour cent en poids à 20 pour cent en poids de ruthénium, et dans lequel le liant du second matériau composite de carbure cémenté est dénué de ruthénium ou comprend une quantité accessoire de ruthénium.

19. Outil de coupe composite selon la revendication 1, dans lequel l'outil de coupe composite est une plaquette d'outil de coupe choisie dans le groupe constitué par les plaquettes à fraise en bout et les plaquettes de forage à langue d'aspic, la plaquette d'outil de coupe comprenant :
une première région constituée d'un premier matériau composite de carbure cémenté et comprenant une arête coupante ;
une seconde région liée métallurgiquement à la première région et constituée d'un second matériau composite de carbure cémenté ;
dans lequel le premier matériau composite de carbure cémenté et le second matériau composite de carbure cémenté comprennent individuellement des particules de carbure dans un liant, dans lequel le liant du premier matériau composite de carbure cémenté comprend de 8 pour cent en poids à 20 pour cent en poids de ruthénium, et dans lequel le liant du second matériau composite de carbure cémenté est dénué de ruthénium ou comprend une quantité accessoire de ruthénium.
